# EUROPEAN PATENT APPLICATION

(11) **EP 4 557 025 A1**
(43) Date of publication of application: **21.05.2025**
(21) Application number: 23839526.3
(22) Date of filing: 04.07.2023
(51) Int. Cl.: G05B 19/05

(54) **CONTROL PROGRAM EDITING DEVICE, EDITING METHOD, AND PROGRAM**

(30) Priority: 15.07.2022 JP 2022114134
(71) Applicant: OMRON Corporation, Kyoto 600-8530 (JP)
(72) Inventor: KAGAWA, Tetsuo, Kyoto-shi, Kyoto 600-8530 (JP)
(74) Representative: Becker, Eberhard
(86) International application number: PCT/JP2023/024759
(87) International publication number: WO 2024/014354

(57) **Abstract**

The present invention makes it possible to easily and without mistakes select an element that is stored among array variables in an IDE of a FA system. A control-program-editing device (1) for editing a control program, the device comprising a search term input unit (11) that accepts a user input of a search term when a specific element is inputted into a control program from variables that include a plurality of elements, an element-list-acquiring unit (12) that acquires an element list, an extracting unit (13) that extracts elements that are associated with the search term, and a display control unit (14) that performs control to display the elements extracted by the extracting unit and to display comments that explain the elements, with a user input that selects one element from the displayed elements being accepted and applied to the control program.

## Description

### Technical Field

The disclosure relates to a control program editing device.

### Related Art

It is common to develop a program using an integrated development environment (IDE). In order to reduce an input amount by users, an IDE is equipped with an input assistance function that complements the input content based on the information input. For example, Patent Document 1 discloses an input assistance method for a variable name in programmable logic controller (PLC) programming. In this input assistance method, when multiple narrowed-down variable names exist and one or more consecutive next strings match each other between those variable names, those series of strings that have no room for selection are automatically adopted and determined as a string of a target variable name without waiting for an operator's input.

In a program in a PLC, a comment can be set for an element of an array variable. The reason is that, in the PLC program, with respect to contacts and coils used in a program process, without being limited to the author of the program, it is common for a user other than the author of the program to understand and modify the program by giving a comment that represents a role of the contacts and coils.

IEC 61131-3 recommends using variable programming. Hence, it is recommended to variablize the contacts and coils used in the program process as well. However, if individual variables are separately set for these contacts and coils, the number of variables becomes enormous, impairing user convenience. Accordingly, these contacts and coils may be subjected to centralized management using an array variable. This tendency is not limited to contacts and coils, but also applies to any variables such as integer type variables and floating-point type variables.

### Prior Art Documents

### Patent Documents

Patent Document 1: Japanese Patent Laid-Open No. 2010-238225

### SUMMARY OF THE INVENTION

### Problems to be Solved by the Disclosure

However, in the conventional technology as described above, a large number of elements are stored in the array variable, and it is necessary to specify an index of the array variable and limit the corresponding element. When limiting an element in the array variable, the user needs to refer to a list of comments on the elements in a variable table and specify an appropriate element by an index.

One aspect of the disclosure aims to provide a control program editing device that enables a user to easily and without mistake select an element stored in an array variable. Means for Solving the Problems

To solve the above problem, one aspect of the disclosure relates to a control program editing device that edits a control program of a factory automation (FA) system. The control program editing device includes: a search term input unit, accepting, as a user instruction to input a specific element from a variable that includes multiple elements to the control program, input of a search term composed of a variable specifying term specifying the variable and an element specifying term specifying the element; an element list acquisition unit, acquiring an element list including candidates of the element related to the variable; an extraction unit, extracting the element related to the element specifying term from the element list; a display control unit, performing control to display the element extracted by the extraction unit and a comment describing the element; a selection unit, accepting user input to select one element from among the elements displayed by the display control unit; and an application unit, inputting the element selected by the selection unit to the control program.

To solve the above problem, another aspect of the disclosure relates to an editing method of a control program editing device that edits a control program of an FA system. The editing method includes: a search term input step of accepting, as a user instruction to input a specific element from a variable that includes multiple elements to the control program, input of a search term composed of a variable specifying term specifying the variable and an element specifying term specifying the element; an element list acquisition step of acquiring an element list including candidates of the element related to the variable; an extraction step of extracting the element related to the element specifying term from the element list; a display control step of performing control to display the element extracted by the extraction step and a comment describing the element; a selection step of accepting user input to select one element from among the elements displayed by the display control step; and an application step of inputting the element selected by the selection step to the control program.

According to the above configuration, a selectable element list including comments can be extracted and displayed, and the user is able to confirm the comments and select an appropriate element. Hence, an element of a variable can be easily specified without mistake, and a program can be efficiently created.

### Effects of the Invention

According to one aspect of the disclosure, it is possible to confirm each element of a variable including multiple elements and specify (select) an appropriate element.

### BRIEF DESCRIPTION OF THE DRAWINGS

FIG. 1 is a block diagram showing a configuration of main parts of a control program editing device according to Embodiment 1.
FIG. 2 is a flowchart showing an operation example of the control program editing device according to Embodiment 1.
FIG. 3 is a display example showing an example of an element list in the case where a search term is "Bit2DimArray[0,2".
FIG. 4 is a display example showing an example of an element list in the case where an element specifying term is a string.
FIG. 5 is a display example showing an example of extracting an element in a structure.
FIG. 6 shows an example of setting a comment on an array variable (or structure) including multiple elements.

### DESCRIPTION OF THE EMBODIMENTS

### [Embodiment 1]

An embodiment (hereinafter also referred to as "the present embodiment") according to one aspect of the disclosure will be hereinafter described based on the drawings. In the drawings, the same or equivalent portions are given the same reference numerals, and their descriptions are not repeated.

### §1. Applicable Example

A PLC program is created using a control program editing device represented by an IDE or the like. The control program editing device enables development in five languages defined by IEC 61131-3. In these languages, data is stored in variables, and various operations are performed, thereby controlling a device.

It is common to give a comment to a PLC variable so that anyone can understand the structure of the program without depending on the user. Some variables hold multiple values of an array or structure. Hence, it is preferable to give a comment to an array element or a structure element (member variable) as well.

Particularly in variable programming, it is necessary to give a variable name to each contact and coil in addition to comments. Here, in ladder language, it is common to describe a program using a large number of contacts and coils. Hence, a large number of variables are required, and it is difficult for the user to remember each variable name. When there are a large number of variables, variable registration and variable search become very complex, impairing user convenience. Accordingly, in variable programming, a large number of contacts and coils used in a program are arranged into arrays.

However, when using an array including a large number of contacts and coils, the user may not know which index stores an appropriate element and may erroneously specify an index. Accordingly, in the present embodiment, when specifying an array index, a search is performed targeting an integer value (limited to a numerical value within the range of the array) or variable name that can specify the index, using information about already input indices. After that, by drawing a list of search results with comments added around a variable input by the user, the control program editing device assists the user in inputting to specify the index. That is, the control program editing device is equipped with an input assistance function for specifying an index of an array variable.

Here, in the case where the information about already input indices is an integer of 0 or greater, the control program editing device also displays the comments related to several integer values before and after that integer. With this approach, the user is able to select an appropriate index number simply by having a rough idea about the index number. Hence, even when writing a program with indices broadly divided for each control block, the user is able to easily specify a target index.

### §2. Configuration Example

### (Control Program Editing Device 1)

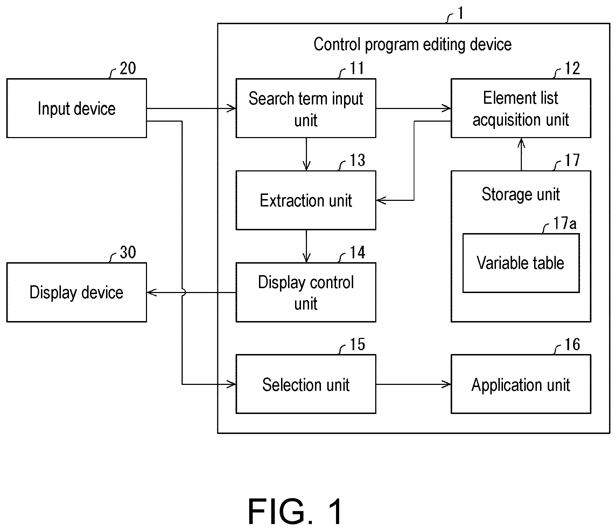

FIG. 1 is a block diagram showing a configuration of main parts of a control program editing device 1 according to Embodiment 1. The control program editing device 1 includes a storage unit 17, a search term input unit 11, an element list acquisition unit 12, an extraction unit 13, a display control unit 14, a selection unit 15, and an application unit 16. An input device 20 such as a keyboard and a mouse, and a display device 30 such as a display are connected to the control program editing device 1.

The storage unit 17 stores a variable table 17a used in a control program. In the control program editing device 1, the variable table 17a is acquired from the storage unit 17 as appropriate and an input assistance function is achieved. The variable table 17a may be stored in an external device (for example, a cloud server).

A large number of variables are stored in the variable table 17a. Examples of the stored content include variable names of the variables, data types of the variables, and comments. The variable table may include array variables and structures. In the cases of array variables and structures, their constituent elements (elements of array variables in the case of array variables, and members in the case of structures) are also stored.

The search term input unit 11 accepts user input of a search term as a user instruction to input a specific element from a variable that includes multiple elements to the control program. That is, the search term input unit 11 accepts user input of an array variable and a search term that specifies an element of the array variable through the input device 20.

The search term input by the user is composed of a variable specifying term that specifies a variable name, an element specifying term that specifies an element, and an identifier that identifies what kind of variable the variable is. The search term input unit 11 outputs the variable specifying term to the element list acquisition unit 12 and the element specifying term to the extraction unit 13.

The element list acquisition unit 12 acquires an element list that includes candidates of elements related to the array variable corresponding to the variable specifying term in the search term input unit 11. In other words, an element list of the array variable, that is, an index range, and a list of variables that can specify indices, that is, integer type variables or structure variables, is acquired. The element list acquisition unit 12 outputs the element list to the extraction unit 13.

The extraction unit 13 extracts an element corresponding to the element specifying term from the element list. The details of this processing will be described later. The extraction unit 13 outputs the extracted element to the display control unit 14.

The display control unit 14 displays the element extracted by the extraction unit 13 on the display device 30. At this time, the display control unit 14 displays the element together with a comment describing the element. The data type of the element may also be displayed.

The selection unit 15 accepts user input through the input device 20 to select one element from among the elements displayed by the display control unit. The selection unit 15 outputs the accepted user input to the application unit 16.

The application unit 16 inputs the element selected by the selection unit 15 to the control program. That is, the selected element is input as an index of the array variable.

### §3. Operation Example

### (Generation of Element List)

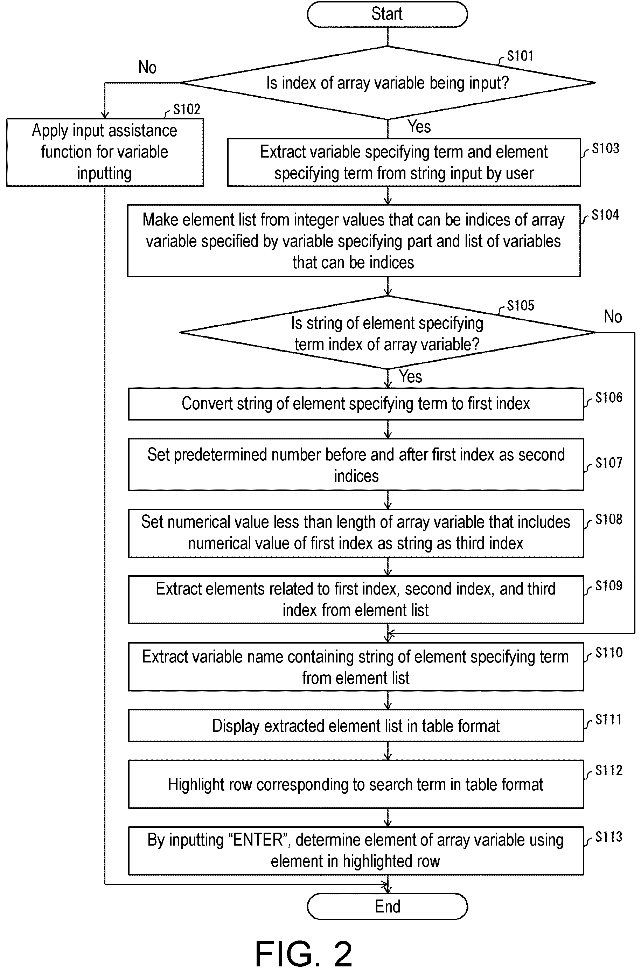

FIG. 2 is a flowchart showing an operation example of the control program editing device 1 according to Embodiment 1.

First, the search term input unit 11 determines whether a string (search term) input by the user is an array variable and whether an index of the array variable is being input (S101). Specifically, it is confirmed whether an identifier "[" or "," indicating an array variable is included in the search term.

If the search term is not an array variable (No in S101), the display control unit 14 applies an input assistance function for variable inputting to the display device 30 (S102).

If the search term is an array variable (Yes in S101), the search term input unit 11 extracts a variable specifying term, an element specifying term, and an identifier from the search term (S103). Here, the variable specifying term is a string that specifies a variable name of the array variable. The element specifying term is a string that specifies an element of the array variable. The identifier is a symbol that identifies that the search term specifies an array variable and an element thereof.

For example, a case is described where the string (search term) input is "Bit2DimArray[0,2". The identifier in the array variable is the last one among "[" or ",". Hence, the string "Bit2DimArray[0" before "," is the variable specifying term, indicating the array variable with this name. The string "2" after "," is the element specifying term, indicating the index of the array variable. Here, the variable specifying part has a content meaning a two-dimensional array, and "0" is specified as the content specifying an element of the first dimension. That is, the above search term is a search term attempting to extract an element of the second dimension as "2" where the element of the first dimension of the array variable "Bit2DimArray" is "0".

The element list acquisition unit 12 makes an element list from integer values that can be indices of the array variable and a list of variables that can be indices (S104). That is, integer values of 0 or greater and less than a length of the array variable are included in the element list. A list of variables of integer values or structure variables (variables whose stored values can be indices) is included in the element list.

Next, the search term input unit 11 determines whether the element specifying term is an index of the array variable by the input device 20 (S105). Specifically, it is determined whether the string of the element specifying term is an integer of 0 or greater, and whether the integer value is less than the length of the array variable. If the string of the element specifying term is not an index of the array variable (No in S105), the process proceeds to S110.

If the string of the element specifying term is an index of the array variable (Yes in S105), the string of the element specifying term is converted to an integer value and set as a first index (S106). A predetermined number (for example, 7 each) of integer values before and after the first index as the median value are set as second indices (S107).

A numerical value less than the length of the array variable that includes the numerical value of the first index as a string is set as a third index (S108). That is, if the element specifying term is "2" and the length of the array variable is "20", "2, 12, 20" become third indices.

The extraction unit 13 extracts elements related to the first index, the second index, and the third index (S109). Here, duplicates in the first index, the second index, and the third index may be removed, and the extracted elements may be sorted in ascending order.

A variable name containing the string of the element specifying term is extracted from the element list (S110). That is, if the element specifying term is "2", an element with a variable name containing "2", such as "Axis2_Cmd", is extracted from the element list that incorporates the list of variables.

### (Display and Selection of Element List)

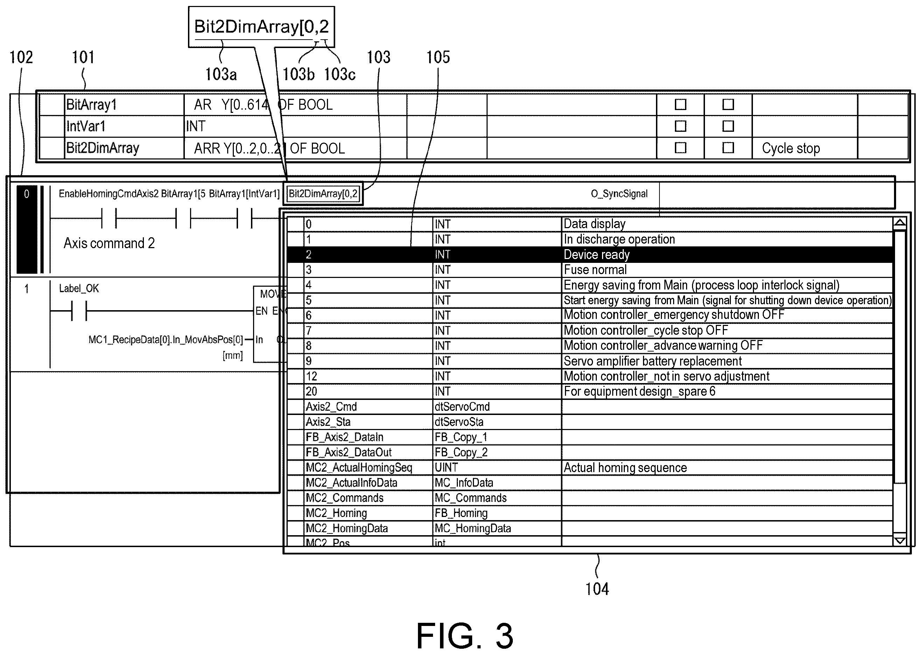

The display control unit 14 displays the extracted element list in a table format on the display device 30 (S111). FIG. 3 is an example display showing an example of the element list in the case where the search term is "Bit2DimArray[0,2".

In FIG. 3, reference numeral 101 indicates a portion of the variable table 17a used in the control program, reference numeral 102 indicates an edit area, reference numeral 103 indicates an array variable during input, and reference numeral 104 indicates an element list that complements the array variable during input. Reference numeral 103 states "Bit2DimArray[0,2". Hence, a variable specifying term 103a is "Bit2DimArray[0", an identifier 103b is ",", and an element specifying term 103c is "2". That is, it is indicated that the array variable "Bit2DimArray" has been specified, an index of the first dimension thereof is "0", an index of the second dimension exists, and a search term therefor is "2".

As indicated by reference numeral 104 in FIG. 3, the extracted element list is shown in a table format with the number of rows corresponding to the number of extracted element lists, including a first column showing the index or variable name, a second column showing the data type of the first column, and a third column showing the comment of the first column. The table showing the extracted element list may be displayed directly below the description of the array variable during input.

The display control unit 14 may highlight (reference numeral 105) a row corresponding to the search term (S112). The highlighted row may be changed by using the up and down arrow keys on the keyboard or by clicking with the mouse.

After that, in the case where "ENTER" is input from the keyboard, the selection unit 15 determines an element of the array variable during input using an element in the highlighted row (S113). Regardless of the presence or absence of highlighting, by double-clicking with the mouse or by long pressing with a pointing device such as a touch panel, a pointed target may be determined as the element.

### (In Case Where Search Term is String)

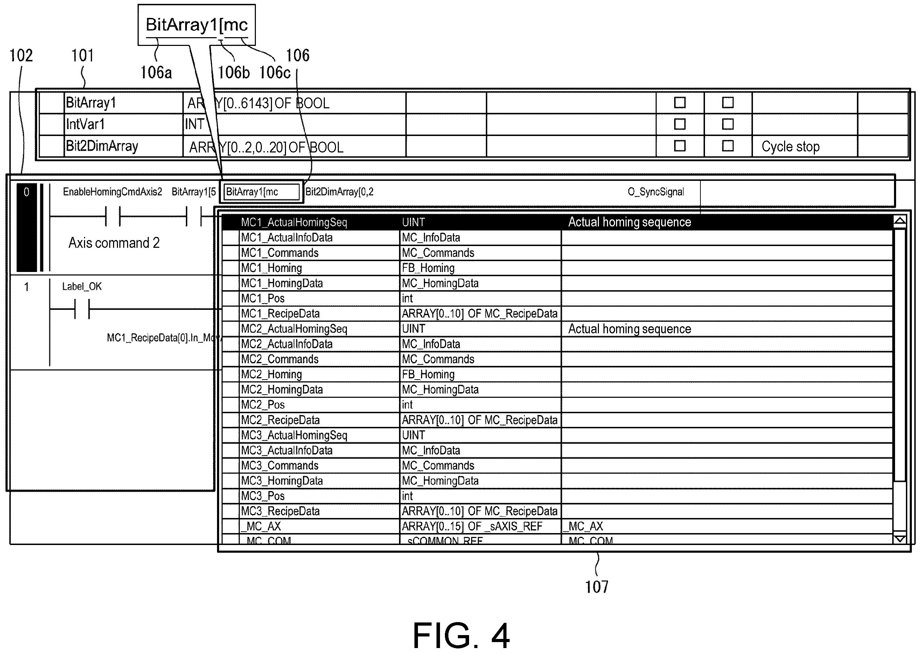

FIG. 4 is an example display showing an example of the element list in the case where the element specifying term is a string. As shown in FIG. 3, in the case where the element specifying term is a string, the result is No in S101 and the process proceeds to S106. Hence, extraction using an index less than the length of the array variable is not performed.

In FIG. 4, a variable specifying term 106a is "BitArray1", an element specifying term 106c is "mc", and an identifier 106b is "[".

As shown in FIG. 4, as indicated by reference numeral 106, "mc" is input as the element specifying term 106c. Hence, instead of reference numeral 104 in FIG. 3, FIG. 4 shows the extracted element list with reference numeral 107. In this way, when a variable (integer type variable or structure variable) that can be an index of the array variable is input at an index position of the array variable, the inputting can be complemented by the input assistance function.

Unlike the case where an integer value is input as the element specifying term, a row highlighted in the initial stage may be the top row. The reason is that, when the search term is an integer value, a row completely corresponding thereto is present; when the search term is a string, a row completely corresponding thereto may not be present. That is, if there exists an element that completely matches the search term, it is possible to display that row only and highlight the row.

### §4. Operation and Effects

According to the above configuration, since a selectable element list including comments is extracted and displayed, the user is able to confirm the comments and select an appropriate element. Hence, the user is able to easily and without mistake specify an element of a variable, and is able to efficiently create a program.

The user is able to confirm a data type in the element list specifying the index of the array variable. That is, in the case of directly specifying the index of the array, the data type is INT type; in the case of indirectly specifying using an integer type variable or structure type variable or the like, the data type of the variable can be confirmed using the element list. Hence, mistakes in creating the program can be prevented.

Particularly, in the case where an integer value representing an index is used as the search term, comments related to indices corresponding to before and after the integer value are displayed together in addition to the integer value. Hence, the user is able to specify a target element without having to accurately input the index. This is particularly effective because when several indices are assigned to each block to be controlled in producing a program, it is sufficient to have a rough idea of the indices of the block to be controlled without the need to remember the accurate indices.

A variable name for indirectly specifying the index of the array variable can also be selected from the element list. Hence, a program can be created simply by remembering an approximate variable name.

### [Embodiment 2]

Another embodiment of the disclosure will be described below. For convenience of description, members having the same function as those described in the above embodiment are denoted by the same reference numerals, and their descriptions are not repeated.

In Embodiment 1, it is shown easily and accurately specifying an element in an array variable including multiple elements. In Embodiment 2, it is shown easily and accurately specifying an element in a structure including multiple elements.

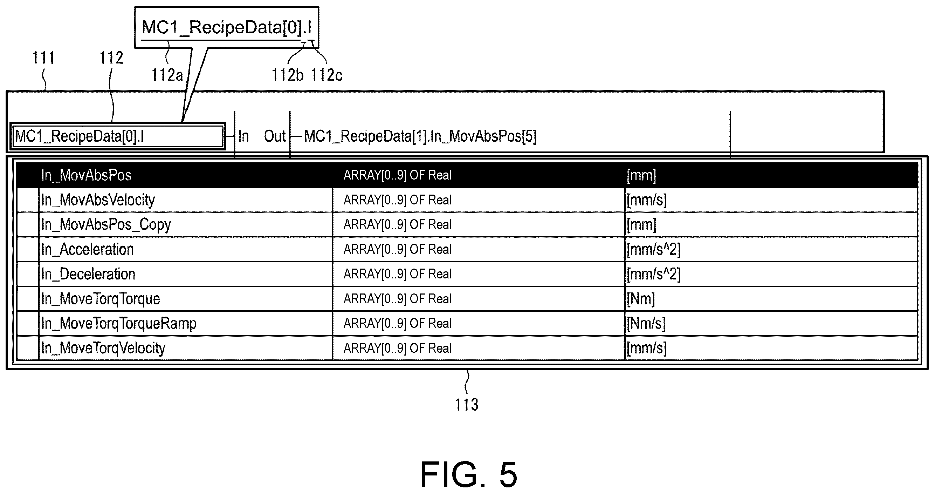

FIG. 5 is a display example showing an example of extracting an element in a structure. In FIG. 5, reference numeral 111 indicates an edit area, reference numeral 112 indicates a search term during input, and reference numeral 113 indicates an element list that complements the structure during input. In reference numeral 112, "MC1_RecipeData[0].I" is specified as the search term.

In this search term, a variable specifying term 112a is "MC1_RecipeData[0]", an element specifying term 112c is "I", and an identifier 112b is ".".

Here, an example is shown where "I" is input for the element specifying term 112c. However, the element specifying term 112c may be blank. In that case, all structure element lists are displayed by the display control unit 14 at reference numeral 113.

While a structure is described in Embodiment 2, the description is not limited to structures. For example, a union may also be used. That is, any variable may be used that includes multiple members in which an element is specified by a string of the element specifying term.

### [Example of Comment Setting]

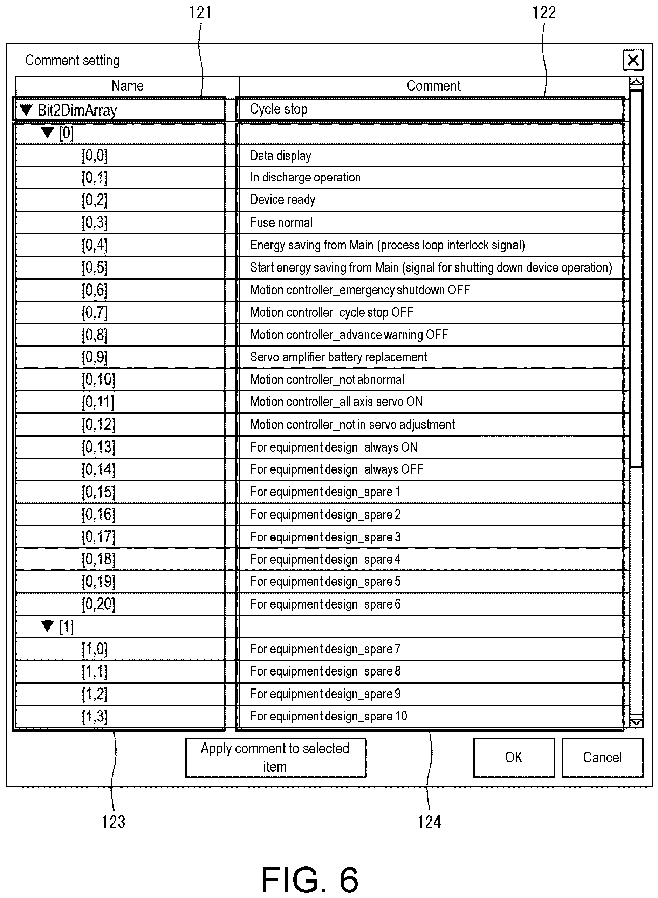

FIG. 6 shows an example of setting a comment on an array variable (or structure) including multiple elements. In FIG. 6, reference numeral 121 is a variable name of the array variable. Reference numeral 122 is a comment on the array variable itself. Reference numeral 123 is a list of indices that the array variable may take. Reference numeral 124 is a comment corresponding to each index.

The areas of reference numerals 123 and 124 can be switched between displaying a large number of elements individually or collectively by selecting the triangle mark, making it easy to view when there are a large number of elements. This is particularly effective in an array variable of a two-dimensional array or the like.

The example of setting a comment on an element shown in FIG. 6 is not limited to array variables and may also apply to structures.

### [Modifications]

### (In Case Where Search Term is Blank)

In Embodiments 1 and 2, in the case where the search term is blank, all elements of the element list may be displayed. In the case of an array variable, with respect to displaying index variables, the indices may be displayed with skipped numbers at regular intervals instead of being displayed in consecutive numbers. Accordingly, approximate index numbers can be easily found out.

### (Display Form of Element List)

In the control program editing device according to Embodiment 1, the element list (reference numeral 104) displayed by the display control unit may be divided into upper and lower sections, which can be scrolled independently. The upper section may, after displaying the extracted candidates as shown in Embodiment 1, display in order other elements of the array variable that were not extracted.

The reason is to allow an element to be selectable even in the case where selection of a search term is incorrect during extraction.

The lower section displays only the extracted elements similarly to Embodiment 1.

### [Summary]

To solve the above-mentioned problem, a control program editing device according to one aspect of the disclosure is a control program editing device that edits a control program of an FA system. The control program editing device includes: a search term input unit, accepting, as a user instruction to input a specific element from a variable that includes multiple elements to the control program, input of a search term composed of a variable specifying term specifying the variable and an element specifying term specifying the element; an element list acquisition unit, acquiring an element list including candidates of the element related to the variable; an extraction unit, extracting the element related to the element specifying term from the element list; a display control unit, performing control to display the element extracted by the extraction unit and a comment describing the element; a selection unit, accepting user input to select one element from among the elements displayed by the display control unit; and an application unit, inputting the element selected by the selection unit to the control program.

To solve the above-mentioned problem, an editing method according to another aspect of the disclosure is an editing method of a control program editing device that edits a control program of an FA system. The editing method includes: a search term input step of accepting, as a user instruction to input a specific element from a variable that includes multiple elements to the control program, input of a search term composed of a variable specifying term specifying the variable and an element specifying term specifying the element; an element list acquisition step of acquiring an element list including candidates of the element related to the variable; an extraction step of extracting the element related to the element specifying term from the element list; a display control step of performing control to display the element extracted by the extraction step and a comment describing the element; a selection step of accepting user input to select one element from among the elements displayed by the display control step; and an application step of inputting the element selected by the selection step to the control program.

According to the above configuration, a selectable element list including comments can be extracted and displayed, and the user is able to confirm the comments and select an appropriate element. Hence, an element of a variable can be easily specified without mistake, and a program can be efficiently created.

The display control unit may further display a data type of the element.

According to the above configuration, the data type of the element (index, variable, or member) can be confirmed in the element list, and mistakes in creating the program can be prevented.

In the case where an integer value is input as the element specifying term, the extraction unit may extract the element having an index number corresponding to the integer value and the elements having index numbers included in a predetermined range before and after the integer value.

According to the above configuration, an array element can be extracted by index. Since elements before and after the input information can be confirmed in a list, a target element can be specified without having to accurately input the information.

The element list may include a list of variable names. In the case where a string is input as the element specifying term, the extraction unit may extract, as the element, the variable name that includes the element specifying term from the list of variable names.

According to the above configuration, a variable that specifies an index specifying an array element can be easily selected. Hence, it is easy to specify an array element with an appropriate variable, and mistakes in creating the program can be prevented.

In the case where a string is input as the element specifying term, the extraction unit may extract, from the element list, the element having an element name that includes the element specifying term.

According to the above configuration, an element having a string as an element name, such as a member of a structure, can be easily specified. Hence, mistakes in creating the program can be prevented.

The variable may be an array, and the element may be specified by an integer value.

According to the above configuration, an element of an array variable can be specified by specifying an integer value as an index.

The variable may be a structure or union, and the element may be specified by a member.

According to the above configuration, an element of a structure variable can be specified by specifying a member using a string.

The control program editing device according to each aspect of the disclosure may be realized by a computer. In this case, a program of the control program editing device that realizes the control program editing device on a computer by causing the computer to operate as each unit (software element) included in the control program editing device, as well as a computer-readable recording medium storing the program, fall within the scope of the disclosure.

### [Examples of Implementation by Software]

A function of the control program editing device 1 (hereinafter referred to as "device") can be realized by a program for causing a computer to function as the device, which is a program for causing a computer to function as each control block of the device.

In this case, the device includes a computer having at least one control device (for example, processor) and at least one storage device (for example, memory) as hardware for executing the above program. By executing the above program with the control device and the storage device, each function described in each of the above embodiments is realized.

The above program may be stored on one or multiple non-transitory computer-readable recording media. The recording media may or may not be included in the device. In the latter case, the above program may be supplied to the device through any wired or wireless transmission medium.

It is possible to realize some or all of the functions of each of the above control blocks by a logic circuit. For example, an integrated circuit in which a logic circuit is formed functioning as each of the above control blocks is also included in the scope of the disclosure. It is also possible to realize the functions of each of the above control blocks by, for example, a quantum computer.

### [Supplementary Matters]

The disclosure is not limited to each of the above-described embodiments, and various changes are possible within the scope shown in the claims. Embodiments obtained by appropriately combining technical means disclosed in different embodiments are also included in the technical scope of the disclosure.

### Description of Reference Numerals

1: control program editing device
11: search term input unit
12: element list acquisition unit
13: extraction unit
14: display control unit
15: selection unit
16: application unit
20: input device
30: display device

## Claims

1. A control program editing device that edits a control program of an FA system, comprising:
a search term input unit, accepting, as a user instruction to input a specific element from a variable that comprises a plurality of elements to the control program, input of a search term composed of a variable specifying term specifying the variable and an element specifying term specifying the element;
an element list acquisition unit, acquiring an element list comprising candidates of the element related to the variable;
an extraction unit, extracting the element related to the element specifying term from the element list;
a display control unit, performing control to display the element extracted by the extraction unit and a comment describing the element;
a selection unit, accepting user input to select one element from among the elements displayed by the display control unit; and
an application unit, inputting the element selected by the selection unit to the control program.

2. The control program editing device according to claim 1, wherein
the display control unit further displays a data type of the element.

3. The control program editing device according to claim 1, wherein
in a case where an integer value is input as the element specifying term,
the extraction unit extracts the element having an index number corresponding to the integer value and the elements having index numbers comprised in a predetermined range before and after the integer value.

4. The control program editing device according to claim 1, wherein
the element list comprises a list of variable names; and
in a case where a string is input as the element specifying term,
the extraction unit extracts, as the element, the variable name that comprises the element specifying term from the list of variable names.

5. The control program editing device according to claim 1, wherein
in a case where a string is input as the element specifying term,
the extraction unit extracts, from the element list, the element having an element name that comprises the element specifying term.

6. The control program editing device according to any one of claims 1 to 5, wherein
the variable is an array, and the element is specified by an integer value.

7. The control program editing device according to any one of claims 1 to 5, wherein
the variable is a structure or union, and the element is specified by a member.

8. An editing method of a control program editing device that edits a control program of an FA system, comprising:
a search term input step of accepting, as a user instruction to input a specific element from a variable that comprises a plurality of elements to the control program, input of a search term composed of a variable specifying term specifying the variable and an element specifying term specifying the element;
an element list acquisition step of acquiring an element list comprising candidates of the element related to the variable;
an extraction step of extracting the element related to the element specifying term from the element list;
a display control step of performing control to display the element extracted by the extraction step and a comment describing the element;
a selection step of accepting user input to select one element from among the elements displayed by the display control step; and
an application step of inputting the element selected by the selection step to the control program.

9. A program for causing a computer to function as the control program editing device according to claim 1, wherein
the program causes the computer to function as the search term input unit, the element list acquisition unit, the extraction unit, the display control unit, the selection unit and the application unit.
